# EUROPEAN PATENT SPECIFICATION

(11) **EP 3 191 386 B1**
(45) Date of publication and mention of the grant of the patent: **07.06.2023**
(21) Application number: 15762914.8
(22) Date of filing: 08.09.2015
(51) Int. Cl.: B65G 47/71

(54) **A METHOD AND SYSTEM FOR ORDERING A FEEDING SEQUENCE**
VERFAHREN UND SYSTEM ZUR REIHUNG EINER EINSPEISUNGSSEQUENZ
PROCÉDÉ ET SYSTÈME POUR ÉTABLIR UN ORDRE D'UNE SÉQUENCE D'ALIMENTATION

(30) Priority: 09.09.2014 DK 201470553
(43) Date of publication of application: 19.07.2017
(73) Proprietor: BEUMER Group A/S, 8200 Århus N (DK)
(72) Inventor: LYKKEGAARD, Uffe, 8000 Aarhus C (DK)
(74) Representative: Plougmann Vingtoft a/s
(86) International application number: PCT/DK2015/050268
(87) International publication number: WO 2016/037624

(56) References cited:
- EP-A1- 0 927 689
- EP-A1- 3 030 507
- WO-A1-2008/022940
- WO-A2-01/24947
- CN-Y- 201 186 816

## Description

### FIELD OF THE INVENTION

The invention relates to a method of and system for ordering a feeding sequence of items. Particularly, the invention relates to ordering items in a conveyor feeding system leading items to a sorter of an item sorting system, including positioning of the items side-by-side on one or more support surfaces of the sorter.

### BACKGROUND OF THE INVENTION

Sorting systems are used for sorting items, such as baggage, parcels, or other items of varying dimensions and shapes. Feeding systems lead the items to the system, where the items are sorted by discharging them at their intended discharges. It is of interest that such sortation is carried out as efficiently as possible with, e.g., as low cost of the equipment as possible, as low cost as possible during operation and maintenance, for as long as possible, while, e.g., having a given capacity and a given need for space.

EP 0 963 929 discloses a way of re-arranging a feeding sequence of items, in order to place the items on a cross-belt sorter, so that starboard side and portside items are correctly loaded and located on the cart for off-loading. A, in a horizontal plane, turnable conveyor 8 is used for this. However, the conveyor takes up space and when two items are turned for switching place in the sequence, all transport belts need to stop during the turning, which is time consuming and may lead to empty carts passing the loading station.

EP 0 927 689 A1 discloses a sorting system in which items are laterally diverted before entering an induction conveyor leading to a sorter.

The inventor of the present invention has appreciated that an improved method of and system for ordering a feeding sequence of items is of benefit, and has in consequence devised the present invention.

### SUMMARY OF THE INVENTION

It may be seen as an object of the present invention to provide an improved method of and system for ordering a feeding sequence of items. Preferably, the invention alleviates, mitigates or eliminates one or more of the above or other disadvantages singly or in any combination.

It is one object of the present invention to provide an improvement to the earlier presented art. Other objectives may be derived from the specification and figures.

Accordingly there is provided, in a first aspect, a method of ordering a feeding sequence of items, in a feeding system leading items to a sorter of an item sorting system where positioning of two or more items positioned side-by-side on one or more support surfaces of the sorter is foreseen, and where discharge of one or more items towards a first side or a second side of the sorter is foreseen, where the feeding system comprises
- one or more feeding conveyors,
- one or more divert conveyors,
- one or more induction conveyors having two or more induction sections for induction of items from a side of the sorter and for positioning an item from each of the sections side-by-side on the one or more support surfaces of the sorter, where the one or more support surfaces will firstly pass a first induction section in a transport direction of the support surfaces in a track of the sorter, and secondly pass a second induction section, the method comprising
   a) determining which two or more items to be sorted by the sorting system fit dimension-wise for positioning side-by-side on the sorter,
   b) determining which item of the two or more items will firstly reach its discharge location in the transport direction, where discharge of the item should be performed, and
   c) determining a discharge side among the first side and the second side, for the item which will firstly reach its discharge location, and wherein the method further comprises:
      d) providing at least two diverts or divert positions on the one or more divert conveyors, where change of feeding direction of the two or more items can take place, where
         a first of the at least two diverts or divert positions diverts one of the two or more items into the second of the induction sections, and
         a second of the at least two diverts or divert positions diverts another of the two or more items into the first of the induction sections,
      e) providing a choice by choosing at which of the at least two diverts or divert positions the item, which will firstly reach its discharge location, should be diverted,
         in order for said item, after sequential induction of said two or more items by said two or more induction sections onto the one or more support surfaces, to be positioned mostly towards its discharge side relative to the other item(s) of the at least two items,
      f) changing a feeding direction of the at least two items at the at least two diverts or divert positions on the one or more divert conveyors by diverting the two or more items at the at least two divert positions in response to said choice, and hereby ordering the feeding sequence.

Hereby, it may be seen that an improved method for ordering the feeding sequence is provided. At least part of the invention may be seen to lie in the insight and advantage disclosed herein, that ordering a sequence of items can effectively be included in a divert function as disclosed. In particular such ordering and divert function can be seen to be particularly advantageous for items, which should be positioned side-by-side on the sorter, and/or items that are cross-loaded between conveyors in the feeding system and/or onto the sorter.

At least part of the invention and an advantage of the invention may be seen to lie in the insight disclosed herein, that effective ordering of the at least two items can be provided by changing feeding direction for each of the at least two items, but only changing their direction once.

It is understood that in response to the choice, the order may be unchanged, if the order of the objects is already provided for effective side-by-side positioning of the items by the two or more induction sections and subsequent discharge, and therefore the at least two items may be diverted having the order which they had previously to the diversion.

The first and second sections may be separately controllable and/or physically separate sections, such as comprised in two independent inductions. Alternatively, the sections may be a left, i.e. a first 105a, and a right, i.e. a second 105b, sections, parts or areas of the same device, e.g. a conveyor belt. Hereby, and e.g. with proper positioning, size and orientation of the two or more items, e.g. at the latest just after diversion, the two or more items may, e.g., be inducted by one single induction with one single, wide belt with first and second side-by-side sections. Each section has a width fitted for the item sizes handled, when the items have a given orientation and/or when the items are fitted for optimized positioning side-by-side on the induction sections and/or on the sorter.

Further, three or four items may be positioned side-by-side and handled in accordance with the method and system disclosed herein.

When two of the at least two diverts or divert positions are spaced, particularly in a horizontal plane, in a way such that two items arranged to fit side-by-side on the one or more support surfaces can be diverted at the same time, a particular effective diversion and ordering can be provided.

An embodiment of the method and system, which can be found particularly space saving and/or efficient, is when the two or more items are diverted off the one or more divert conveyors in a divert direction crossing a side of the one or more divert conveyors.

In an embodiment of the invention which may be seen to improve effectiveness of the method and system even further, the at least two items are moved in different feeding directions, such as opposite or substantially opposite feeding directions, just prior to being diverted. Hereby, it may, among others be seen that items from more positions and directions can be picked from and diverted as disclosed herein. A particular, simple and yet effective embodiment is when at least one of the at least two items has a feeding direction prior to the diversion which is opposite to or substantially opposite to the feeding direction prior to diversion of at least one of the other of the at least two items.

In an embodiment of the invention, which may be seen to be particularly simple, and yet particularly effective, a first imaginary line through at least two of the two or more divert positions is parallel or substantially parallel with a first feeding direction.

An embodiment of the method and system which can be found particularly space saving and/or efficient is when a second imaginary line along or substantially along a middle of one of the two or more induction sections intersects one of the two or more diverts or divert positions. In further embodiments the second imaginary line additionally intersects one or more alternative diverts or divert positions and/or the second imaginary line is parallel or substantially parallel with a changed feeding direction and/or with a divert direction.

In a particularly effective embodiment, where ordering can still be provided effectively, the change of feeding direction is the last change of moving direction of each of the two or more items until each of the two or more items are received on one or more support surfaces of the sorter.

It is found of particular benefit for increasing effectiveness of the method and system when diverting the at least two items, and hereby changing their feeding direction, comprises maintaining an orientation of each of the items, whereas the feeding direction is changed. Although, possibly less preferred, the orientation of the items may be deliberately changed, e.g., on the one or more divert conveyors.

The effectiveness may be further increased, when the changed feeding direction, i.e. the divert direction, is parallel with an induction angle of one or more induction conveyors of the feeding system. In the embodiments of the invention, the induction angle is sideways and from a side of the sorter in an angle, which angle is preferably less than orthogonal relative to the travelling direction of the support surfaces, which are to receive one or more predetermined items approaching from the diverter. Preferably, the angle is such as 15, 20, 25, 30, 45 or 60 degrees relative to the transport direction of the support surfaces in the sorter. In the figures herein, it follows that the angle is about 25-27 degrees.

In embodiments of the invention the changed feeding direction is the same or substantially the same for each of the at least two items. In a further embodiment, transitions from one conveyor to another, or to a support surface, when the at least two items are conveyed towards and onto the support surfaces are provided at one vertical level or substantially one vertical level.

In an apparatus aspect of the invention there is provided a sortation system with a sorter adapted to transport and sort items positioned side-by-side on one or more support surfaces of the sorter, and adapted to discharge one or more of the items towards a first side or a second side of the sorter, the sortation system further comprising,
- a feeding system leading items to the sorter and adapted to order a feeding sequence of the items, the feeding system comprising
- one or more feeding conveyors,
- one or more divert conveyors,
- one or more induction conveyors having two or more induction sections for induction of items from a side of the sorter and for positioning an item from each of the sections side-by-side on the one or more support surfaces of the sorter, where the one or more support surfaces will firstly pass a first induction section in a transport direction of the support surfaces in a track of the sorter, and secondly pass a second induction section,
- a control logic for controlling the sortation system, where the control logic is adapted to:
   a) determine which two or more items to be sorted by the sorting system fit dimension-wise for positioning side-by-side on the sorter, and
   b) determine which item of the two or more items will firstly reach its discharge location, where discharge of the item should be performed, in a transport direction of the support surfaces in a track of the sorter, and
   c) determine a discharge side among the first side and the second side, for the item which will firstly reach its discharge location,
      and wherein the feeding system further comprises:
         - at least two diverts or divert positions on the one or more divert conveyors,
            where change of feeding direction of the two or more items can take place, where a first of the at least two diverts or divert positions diverts one of the two or more items into the second of the induction sections, and
            a second of the at least two diverts or divert positions diverts another of the two or more items into the first of the induction sections,
      and wherein the control logic is furthermore adapted to:
         - provide a choice by choosing at which of the at least two diverts or divert positions the item which will firstly reach its discharge location should be diverted, in order for said item, after sequential induction of said two or more items by said two or more induction sections onto the one or more support surfaces, to be positioned mostly towards its discharge side relative to the other item(s) of the at least two items, and wherein the feeding system of the sortation system is furthermore adapted to:
            - change a feeding direction of the at least two items at the at least two diverts or divert positions on the one or more divert conveyors by diverting the two or more items at the at least two divert positions in response to said choice, and hereby to order the feeding sequence.

The insights and/or advantages described for the method according to the invention are equally or possibly with minor adaptions, applicable for the apparatus aspect according to the invention.

By referring to an advantage herein, it must be understood that this advantage may be seen as a possible advantage provided by the invention, but it may also be understood that the invention is particularly, but not exclusively, advantageous for obtaining the described advantage.

In general, the various aspects and advantages of the invention may be combined and coupled in any way possible within the scope of the invention.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIGS. 1-4 are top views of a feeding system leading items to a sorter of an item sorting system, shown at consecutive moments,
FIGS. 5-8 are top views of the feeding system of figures 1-4 operated according to a first embodiment of the invention,
FIGS. 9 and 10 are top views of the feeding system of figures 1-4 operated according to a second embodiment of the invention,
FIGS. 11 and 12 are top views of the feeding system of figures 1-4 operated according to a third embodiment of the invention,
FIG. 13 is a top view of the feeding system of figures 1-4 with one or more further feeding conveyors, and operated according to a fourth embodiment of the invention,
FIG. 14 illustrates the sortation system operated with different sizes of objects,
FIGS. 15-18 illustrate various types of support surfaces, and
FIGS. 19 and 20 illustrate two examples of a divert conveyor.

### DESCRIPTION OF EMBODIMENTS

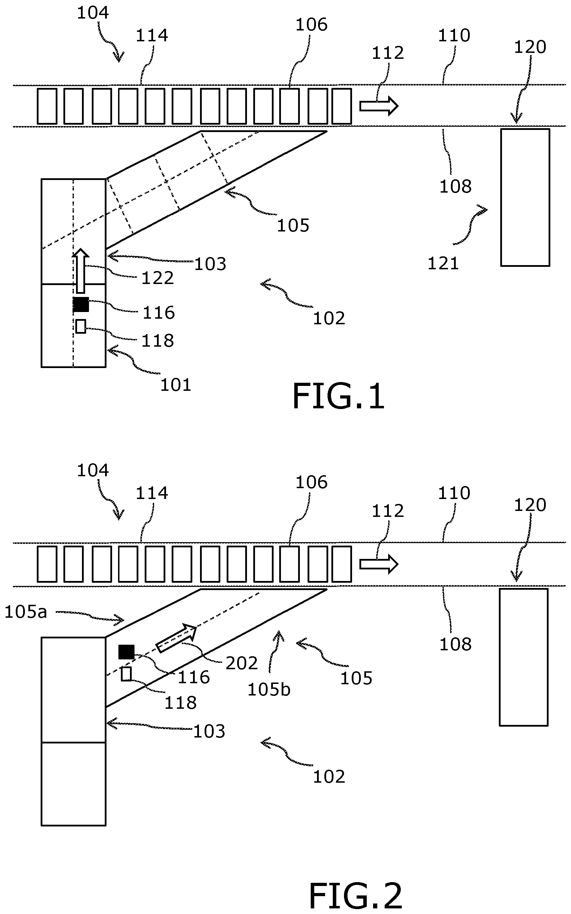

FIGS. 1-4 are top views of a feeding system 102 leading items 116, 118 to a sorter 104 of an item sorting system, shown at consecutive moments. The feeding system 102 comprises conveyors that are all leading or feeding the items to the sorter, but have different additional functions and therefore we will use different names. The first conveyors illustrated in the feeding system comprise one or more feeding conveyors 101, which are at least able to feed items in a first feeding direction 122. The first feeding direction is as shown towards one or more divert conveyors 103 that follow the one or more feeding conveyors 101, which divert conveyors are adapted and positioned to receive items from the one or more feeding conveyors 101.

The divert conveyors include one or more diverters at one or more divert positions or one or more diverting means at divert positions, including means for diverting items from a movement on the divert conveyor and towards and in a direction of movement on one or more induction conveyors 105. Examples of divert conveyors are illustrated herein. The one or more induction conveyors 105 are positioned and adapted to receive items from the one or more divert conveyors 103, and adapted to induct or load the items received onto one or more supporting surfaces 106 of the sorter 104.

The one or more induction conveyors 105 has two or more induction sections 105a, 105b for induction of items from a side of the sorter and for positioning an item from each of the sections side-by-side on the one or more support surfaces of the sorter. As illustrated a support surface will firstly pass a first induction section 105a in a transport direction 112 of the support surfaces in a track 114 of the sorter, and secondly pass a second induction section 105b.

The one or more induction conveyors may be sectioned as described herein, and may comprise narrow belts running in the direction 202. Feeding of the at least two items with the one or more induction conveyors can be provided at a predetermined acceleration and speed, and at an angle sideways and onto the support surfaces. The predetermined acceleration and speed of the induction conveyor is adapted to the speed of the support surfaces, in order that the at least two items 116, 118 are to be received by one or more predetermined support surfaces 106. Thus, the feeding system 102 is leading items to the sorter 104 and is furthermore adapted to order a feeding sequence of the items onto one or more supporting surfaces 106 of the sorter 104, as further described herein.

There is only reference to one support surface 106, but as illustrated, the sorter 104 includes a plurality of support surfaces 106. The support surfaces may be positioned and coupled in an endless train. The endless train can form a horizontal and/or vertical closed loop sorter, as known in the art. Further, the support surfaces may be positioned on one or more carts, where the carts and thus the support surfaces travel in the transport direction 112. It follows that the support surfaces are positioned after each other relative to the travelling direction 112.

When seen in the travelling direction 112, the sorter has a first lateral side 108, to the right of the sorter 104 and a second lateral side 110 to the left of the sorter.

On the first side 108 and at a discharge location 120 there is provided a discharge 121, as illustrated. The discharge is provided for receiving one or more items from the sorter and for a given destination of the items, as known in the art.

As illustrated with the dashed line in the middle or substantially in the middle of the conveyors 101, 103, the conveyors may be divided, possibly physically, but preferably at least only independently controllable, into side-by-side sections. Additionally, the conveyors may also or alternatively be divided in their length direction so as, e.g., to have a divert conveyor with four or more independently controllable sections.

Likewise, and as illustrated with the three dashed lines transverse to the second feeding direction 202 in figure 1 and 2, each conveyor may be divided into further conveyors or sections of conveyors, which conveyors or sections of conveyors can be operated independently or not from the other conveyors or sections of conveyors.

As seen from the figures the shown feeding system 102, feeds items towards the sorter from the first side 108 of the sorter, and inducts the items from the first lateral side onto the support surfaces 106.

In the illustrated system, the items are conveyed towards and onto the support surfaces 106 at substantially one vertical level, including any transitions from one of conveyors 101, 103 and 105 to another, or to a support surface 106. In the example, the support surfaces 106 are cross-belts, but other kinds of support surfaces can be used and are illustrated herein.

The feeding system and sortation system is controlled by a control logic, which is not illustrated, but which may comprise instructions executable by software and which control logic is adapted as described herein. The control logic receives or has already inputs, e.g. in the form of dimensions of the items which may be predetermined or known from identification of an item. Further information is foreseen as inputs to such control logic, such as information of where and to which of the first and second sides 108, 110 one or more destinations for a given item is located along the track of the sorter.

In FIG. 2, the two items 118, 116 are now positioned on the one or more induction conveyors 105. The items have had their movement changed from moving on the one or more feeding conveyors 101 and on the one or more divert conveyors 103, into a movement in a second feeding direction 202 on the one or more induction conveyors 105. The change of movement from the first feeding direction to the second feeding direction took place on the one or more divert conveyors.

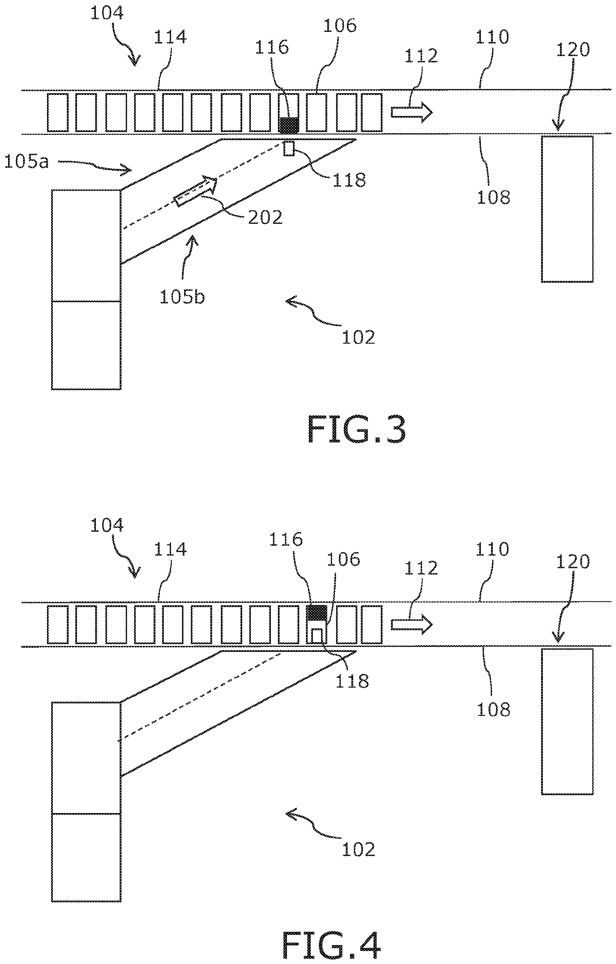

In FIG. 3, the item 116 illustrated in black has been received on one support surface. In the moment later illustrated in FIG. 4, the item 116 has been moved towards the second side 110 of the sorter 104 and the item 118, illustrated in white, has been received on the same support surface, as the item 116 was previously received on.

In figure 4, the items 116 and 118 have now been received by the sorter and are positioned side-by-side on one support surface of the sorter. Hence, the illustrated feeding sequence of the items to the one or more support surfaces, is that the item 116 was firstly inducted by section 105a and received on the support surface of the two items 116, 118, whereas the item 118 was inducted by section 105b and received on the support surface secondly and thus afterwards.

If the item 116 illustrated to the left most of the two items on the support surface was, most efficiently, to be discharged into the discharge 121 illustrated towards the right side 108, this could not be provided. That is, e.g., not unless the item 118 could also be discharged into the discharge 121.

Thus, the illustrated order of the feeding sequence, would inefficiently lead to an unwanted situation where, e.g., a later, when seen in the travelling direction 112, alternative discharge for the item 116, to the left side could be used. Otherwise, e.g. in the event that such alternative discharge is not present, or is unwanted to use, at least one of the items could be discharged into a dump discharge, and the process of feeding the at least one item should be carried out again, resulting in loss of efficiency of the system.

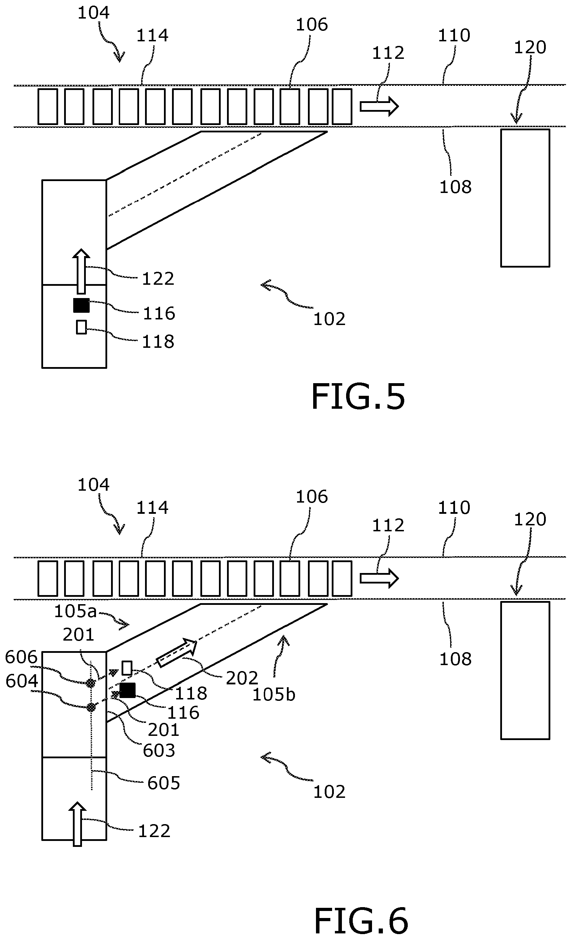

FIGS. 5-8 are top views of the feeding system 102 of figures 1-4 operated according to a first embodiment of the invention. In FIG. 5 it has been or will shortly be determined, in response to adequate inputs to the control logic of the system, that the two items 116, 118 to be sorted by the sorting system fit dimension-wise for positioning side-by-side on a support surface of the sorter when given or having a certain orientation, spacing and their given size.

It has further been determined that of the two items 116, 118, the item 116 illustrated in black, will firstly reach its discharge location 120 at the discharge 121, where discharge of the item 116 can be performed.

Furthermore, it has been determined that the item 116, which will firstly reach its discharge location, has a discharge or discharge side to the first side 108 of the sorter.

As illustrated in FIG. 6, which is a top view of a situation shortly after the situation illustrated in figure 5, and in response to the determinations described herein, a choice is made and carried out. In response to the choice, the black item 116 is diverted in the divert direction 201 at a first divert position 604, and the white item 118 is diverted in the same divert direction 201 at a second divert position 606, as illustrated.

Hereby, and after diverting the two items as illustrated in figure 6 and after sequential induction of the items by the induction sections, the black item 116 becomes the one of the two items, which is positioned mostly towards its discharge side 108 relative to the other of the items. This is contrary to before the items were diverted, as illustrated in figure 5, where it was the white item 118, which would have been positioned mostly towards the first side 108, if the order was unchanged.

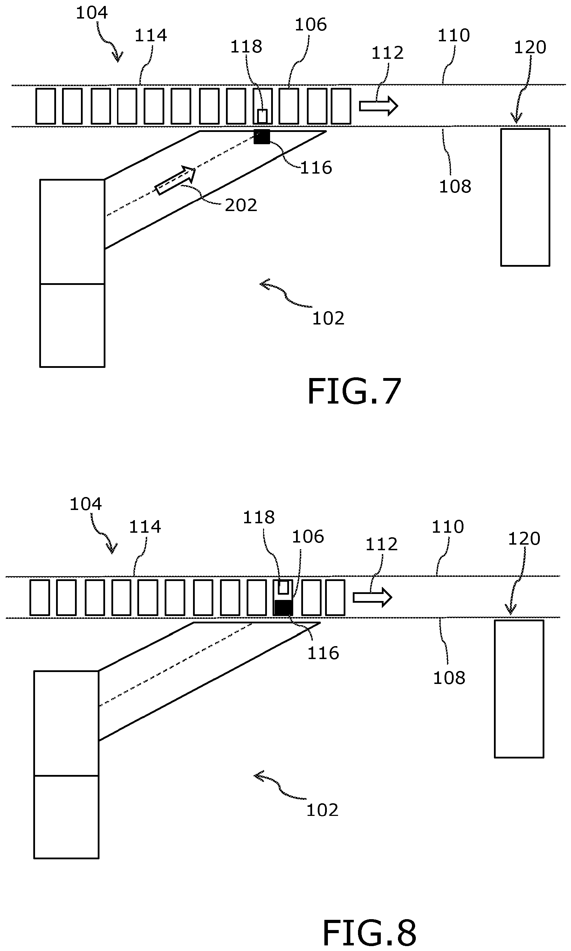

Thus, upon diversion and in response to the described determinations, the feeding sequence of the two items has been ordered. This enables providing the later situations as illustrated in FIG. 7 and 8, and hereby that the white item 118 can be firstly received by the support surface as illustrated in figure 7 and that hereafter the item 116 can be received, so as for the items 116, 118 to be positioned side-by-side as illustrated.

As illustrated, the items are positioned side-by-side so that the item 116, which will firstly reach its discharge location 120, is positioned towards the first side 108 of the sorter towards where its discharge 121 is also positioned. Thus, by using a simple way and manner of ordering the items relative to each other and the sorter in the feeding system as described herein, an efficient way of ordering the feeding sequence, e.g. with the aim to prevent a situation as the one explained in relation to figure 4 is disclosed.

It follows that the diversion of the items provided by and on the one or more divert conveyors 103 is a so-called cross-load diversion where each of the two items in effect changes their feeding direction, but maintains or substantially maintains their orientation. Still further, it follows that a transition of the items from the one or more induction conveyors 105 of the feeding system and to the one or more support surfaces 106 of the sorter is also a cross-load process.

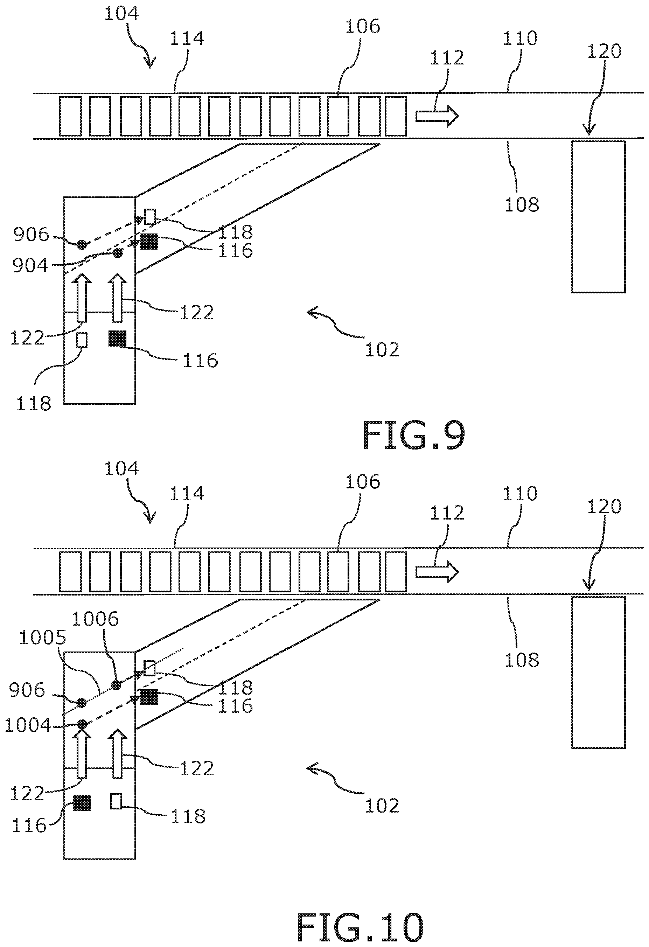

FIGS. 9 and 10 are top views of the feeding system of figures 1-4 operated according to a second embodiment of the invention. There, the two items 116, 118 are positioned and/or moving next to each other as illustrated so that the first and second alternative diverts or divert positions 1004, 1006, respectively, are alternatively positioned to adapt to such possibility.

Combining such first and second alternative diverts or divert positions with the positions as described for figures 5-8 may be found to increase efficiency of the system further. Thus, the wording 'at least two diverts or divert positions', in that two or three or more sets of divert positions, i.e. four, six or more divert positions 604, 606, 904, 906, 1004, 1006 can be used.

In figure 10 it is also illustrated that at least two such diverts or divert positions 604, 606, 904, 906, 1004, 1006, can be positioned so that a second imaginary line 1005 along or substantially along a middle or centre of one of the two or more induction sections intersects one of the two or more diverts or divert positions.

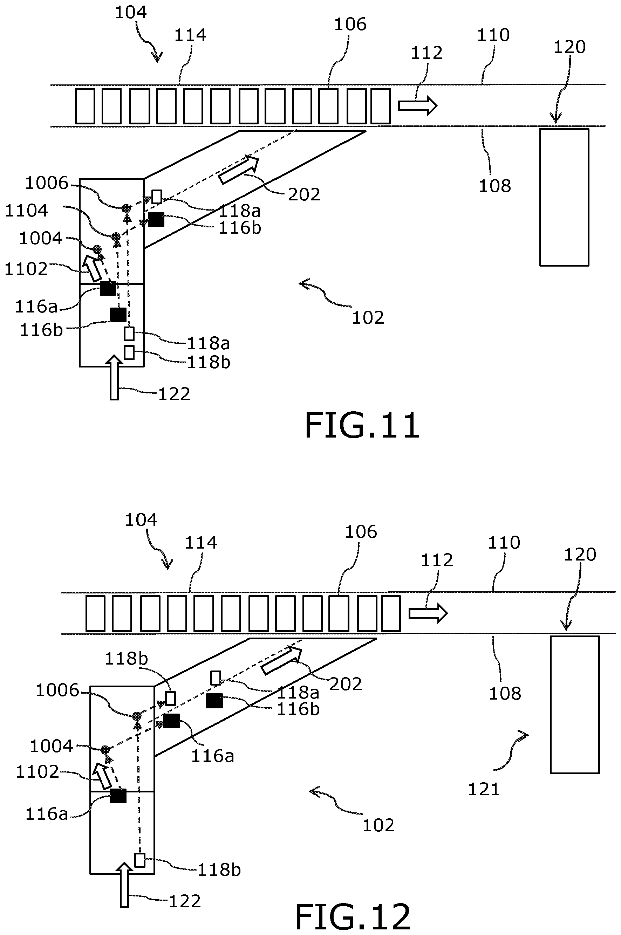

FIGS. 11 and 12 are top views of the feeding system of figures 1-4 operated according to a third embodiment of the invention. In this embodiment the item 116a is fed in the feeding direction 1102 which is non-parallel with the first feeding direction 122, prior to being diverted at a divert position.

FIG. 11 illustrates, that the item 116a is fed to the position 1004, also used and illustrated in figure 10, and that the item 116b is fed to a divert or divert position 1104. In this way, it is illustrated, that the item 116a initially closest to the sorter is positioned in a parking position while and/or until a second item 116b and a third item 118a, which have been found to fit side-by-side on the sorter, are diverted into a movement in the second feeding direction 202.

FIG. 12 illustrates that the first item 116a and a fourth item 118b are paired and diverted, so that a situation of two pairs of objects, where each pair of objects are fitted for side-by-side positioning on the sorter, are ordered for effective induction and subsequent discharge of the items 116b and 116a into the discharge 121.

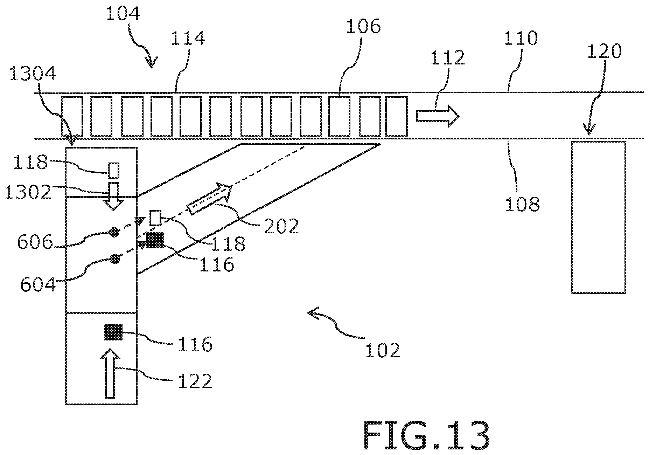

FIG. 13 is a top view of the feeding system of figures 1-4 with one or more further feeding conveyors 1304, and operated according to a fourth embodiment of the invention. Here, the item 118 is moved towards a divert position in a feeding direction 1302 which is opposite to the first feeding direction 122. Hereby it is, among others, possible to have one or more items moving towards one or more of the divert positions in opposite or coinciding directions, and thus from different positions. This may, among others, provide even more positions and items to pick between, before diverting the picked items from either the first or second divert positions, so as to order the items most efficiently in view their current position, orientation, size, discharge location and discharge side etc. as also described herein. In particular, it is understood that the overall aim is most efficiently to fill the support surfaces with items, e.g. using a feeding system using as little floor space as possible, so as most efficiently to sort the items.

In figure 13, the item 118 may as an example already have passed one or more diverts or divert positions in order to reach the shown position. This may e.g. be due to a size and/or discharge location and/or discharge side of the item 118. Alternatively or additionally, being positioned as shown, may be due to a size and/or discharge location and/or discharge side of one or more other items in the feeding system. Thus, the item 118 can in embodiments of the invention, be seen to be waiting for an order of items into which order it will most efficiently fit.

As illustrated, the first feeding direction 122 is transverse to the sorter and perpendicular or substantially perpendicular with the transport direction of the support surfaces. Here it is to be understood that the first feeding direction may be in any angle relative to the transport direction. Thus, the first feeding direction may alternatively be parallel with the transport direction, or between 5 and 85 degrees relative to the transport direction, between 15 and 75 degrees, or between 25 and 65 degrees relative to the transport direction, such as 45 degrees relative to the transport direction.

Each of the embodiments disclosed herein may be combined in any way within the scope of the invention, such as combining the first and/or second embodiments with the third and/or fourth embodiments.

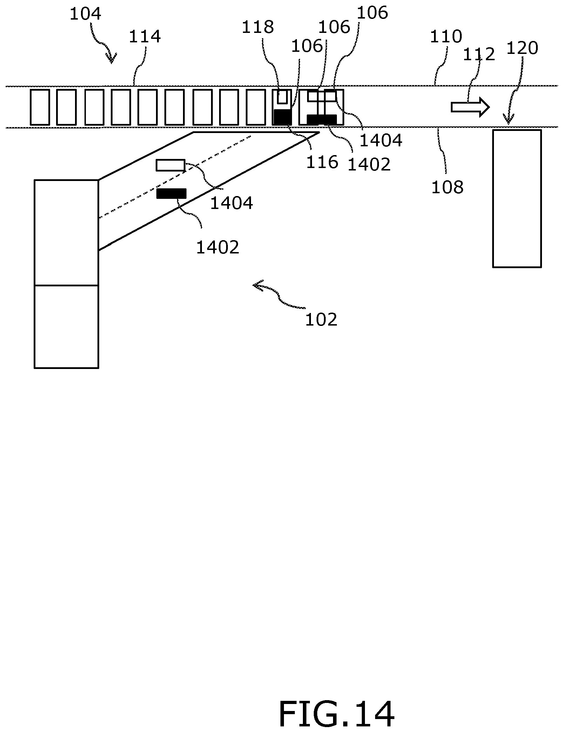

FIG. 14 illustrates the sortation system operated with different sizes of objects. The two items 116, 118 are fitted for side-by-side positioning on one support surface, whereas the items 1402 and 1404 are fitted for side-by-side positioning on two consecutive support surfaces. The invention is found equally of benefit for such embodiments or combinations of such items.

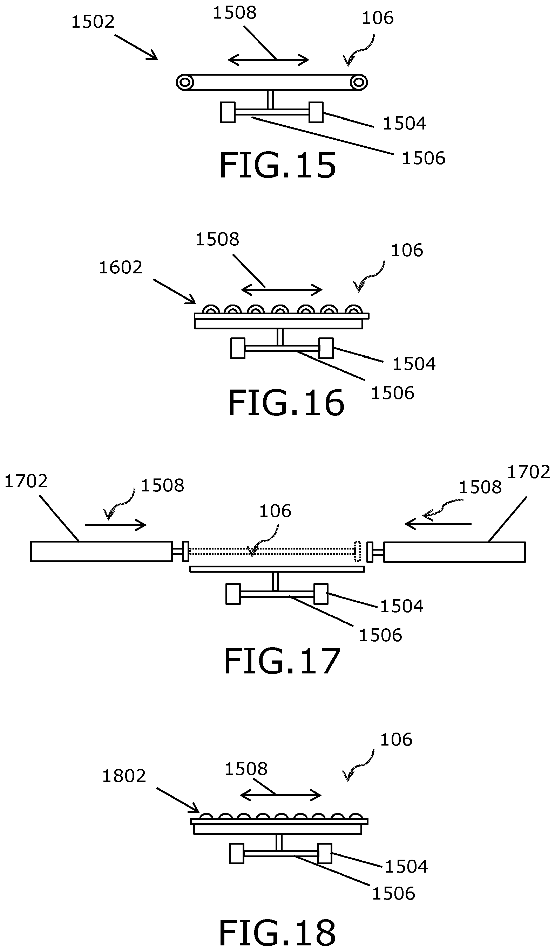

FIGS. 15-18 illustrate various types of support surfaces 106 which the sorter may be equipped with. The support surfaces are seen in a view in the travelling direction of the support surfaces in the track.

FIG. 15 illustrates a cart, chain link or frame 1506 with rolling elements 1504 for engaging the track of the sorter. The cart 1506 is provided with a support surface 106, which is illustrated with a cross-belt 1502 for receiving and/or unloading of items in the direction 1508, which is transverse to the travelling direction of the support surface in the track. Only one belt is illustrated as the support surface, but the support surface may non-physically or physically be sectioned in two or more side-by-side sections, part or belts. Still further, each surface, e.g. one or two or more surfaces on each cart, may be divided into several belts positioned after each other in the travelling direction 112 of the sorter.

FIG. 16 illustrates a cart 1506 equipped with a plurality of controllable rollers 1602 for providing the same or similar function as described for the cross-belt in figure 15.

FIG. 17 illustrates a cart 1506 equipped with a plurality of controllable pushers 1702 for providing the same or similar function as described for the cross-belt in figure 15. The pushers may be positioned underneath the support surface and/or may be provided as so-called sliding shoes or the like, so as only for one or more shoes to be operable above the support surface.

FIG. 18 illustrates that the support surface is equipped with controllable spherical balls, which may or may not be able to retract into the support surface 106.

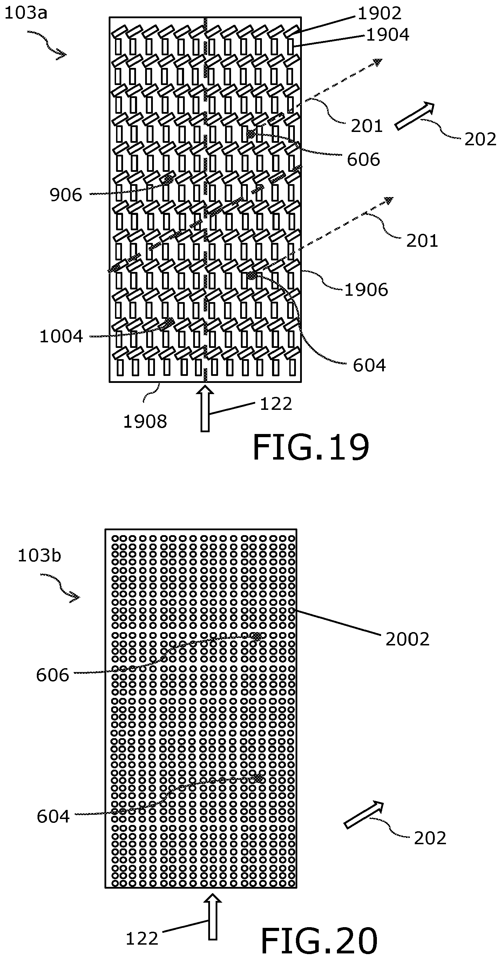

FIGS. 19 and 20 illustrate two examples 103a and 103b of the one or more divert conveyors 103 as illustrated in the figures 1-14. In FIG. 19 a plurality of wheels 1904 are adapted to receive items from a not shown conveyor. The items are received from an end 1908 in the first feeding direction 122. Another plurality of wheels 1902 have a rolling axis perpendicular to the divert direction 201 and the second feeding direction 202. The wheels 1902 may be raised slightly, or the wheels 1904 lowered slightly, in order for the item to be diverted at the first and/or second divert positions 604, 606 using the wheels 1902 and diverting the item in the second feeding direction as illustrated by the arrow 202. The item may be stopped at the diverts or divert positions upon being diverted, but the items may also be diverted while being in motion.

In FIG. 20 the diverter 103b is fitted with controllable driven spherical balls 2002 instead of wheels 1902, 1904. Items can be received from a conveyor in the first feeding direction 122 as illustrated with the arrow 122 and diverted to the second feeding direction 202.

Both variants of the diverter 103a, 103b may be controlled to divert one or more items received from a conveyor and onto an induction conveyor nonstop for enhanced capacity. Other variants of diverters or combinations of variants can be used for the present invention, such as conveyors that include pushers to divert the items in the direction as described herein and at the at least two divert positions as described herein. Further, it is foreseen, that image processing means and/or photocells, item identification means, etc. are provided, although not illustrated, in the feeding system. Particularly, means are foreseen, such as individually controllable sections of the divert conveyor, for positioning and diverting one of the two or more items at one of the at least two divert positions in accordance with the choice made.

Independent of which of the illustrated or others types of diverters or means for providing diversion is used at the at least two divert positions, each divert or divert position may be provided in a separately controllable section of a device. This is illustrated in figure 19 by each divert position 604, 606, 1004, 906 being placed in four separate sections.

In embodiments described, the one or more divert conveyors are adapted to divert the items in the same or substantially in the same second divert direction 201. Alternatively, and although possibly less preferred for possibly complicating the solution, the second feeding direction may be different for each of the two or more items.

In a short and generalized version, the present disclosure regards a method of ordering a feeding sequence of items 116, 118 in a feeding system 102 leading items to a sorter 104 of an item sorting system. The items are positioned side-by-side on one or more support surfaces 106 of the sorter, and for discharge of each of the items towards a first side 108 or a second side 110 of the sorter. The method includes determining which two or more items 116, 118 fit dimension-wise for positioning side-by-side on the sorter, determining which item of the two or more items 116, 118 will firstly reach its discharge location 120 and determining a discharge side among the sides, for the item which will firstly reach its discharge location. In response to these determinations and by diversion of the at least two items at divert positions 604,606, the feeding sequence is ordered.

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing from the scope of the appended claims. Further, in this context, and for the purposes of brevity and clarity, detailed descriptions of well-known apparatus, circuits and methodology have been omitted to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality, and may not necessarily imply a certain sequence or position.

Reference signs are included in the claims; however, the inclusion of the reference signs is only for clarity reasons and should not be construed as limiting the scope of the claims.

## Claims

1. A method of ordering a feeding sequence of items, in a feeding system (102) leading items to a sorter (104) of an item sorting system where positioning of two or more items positioned side-by-side on one or more support surfaces (106) of the sorter is foreseen, and where discharge of one or more items towards a first side (108) or a second side (110) of the sorter is foreseen, where the feeding system comprises
- one or more feeding conveyors (101, 1304),
- one or more divert conveyors (103),
- one or more induction conveyors (105) having two or more induction sections (105a, 105b) for induction of items from a side of the sorter and for positioning an item from each of the sections side-by-side on the one or more support surfaces of the sorter,
where the one or more support surfaces will firstly pass a first induction section (105a) in a transport direction (112) of the support surfaces in a track (114) of the sorter, and secondly pass a second induction section (105b), the method comprising
a) determining which two or more items (116, 118) to be sorted by the sorting system fit dimension-wise for positioning side-by-side on the sorter,
b) determining which item of the two or more items (116, 118) will firstly reach its discharge location (120) in the transport direction (112), where discharge of the item should be performed, and
c) determining a discharge side among the first side (108) and the second side (110), for the item which will firstly reach its discharge location, and wherein the method further comprises:
d) providing at least two diverts or divert positions (604, 606, 904, 906, 1004, 1006) on the one or more divert conveyors, where change of feeding direction of the two or more items can take place, where
a first (604, 904, 1004) of the at least two diverts or divert positions diverts one of the two or more items into the second of the induction sections, and
a second (606, 906, 1006) of the at least two diverts or divert positions diverts another of the two or more items into the first of the induction sections,
e) providing a choice by choosing at which of the at least two diverts or divert positions the item, which will firstly reach its discharge location, should be diverted,
in order for said item, after sequential induction of said two or more items by said two or more induction sections onto the one or more support surfaces, to be positioned mostly towards its discharge side relative to the other item(s) of the at least two items,
f) changing a feeding direction of the at least two items at the at least two diverts or divert positions on the one or more divert conveyors by diverting the two or more items at the at least two divert positions in response to said choice, and hereby ordering the feeding sequence.

2. The method according to claim 1, wherein two of the at least two diverts or divert positions are spaced in a way such that two items arranged to fit side-by-side on the one or more support surfaces (106) can be diverted at the same time.

3. The method according to any of the preceding claims, wherein the two or more items are diverted off the one or more divert conveyors in a divert direction (201) crossing a side (603, 1906) of the one or more divert conveyors.

4. The method according to any of the preceding claims, wherein the at least two items are moved in different feeding directions just prior to being diverted.

5. The method according to any of the preceding claims, wherein the at least two items are moved in opposite feeding directions just prior to being diverted.

6. The method according to claim 3 when claim 3 depends on claim 2, wherein a first imaginary line (605) through at least two of the two or more divert positions is parallel or substantially parallel with a first feeding direction (122).

7. The method according to any of the preceding claims, wherein a second imaginary line (1005) along or substantially along a middle of one of the two or more induction sections intersects one of the two or more diverts or divert positions.

8. The method according to claim 7, wherein the second imaginary line (1005) additionally intersects one or more alternative diverts or divert positions.

9. The method according to claim 8, wherein the second imaginary line is parallel or substantially parallel with a changed feeding direction (202) and/or with a divert direction (201).

10. The method according to claim 3 when claim 3 depends on claim 2, wherein the second imaginary line (1005) is provided in an induction angle of one or more induction sections (105a, 105b).

11. The method according to any of the preceding claims, wherein the change of feeding direction is the last change of moving direction of each of the two or more items until each of the two or more items are received on one or more support surfaces (106) of the sorter.

12. The method according to any of the preceding claims, wherein diverting the at least two items and hereby changing their feeding direction comprises maintaining an orientation of each of the items, whereas the feeding direction is changed.

13. The method according to any of the preceding claims, wherein the changed feeding direction is the same or substantially the same for each of the at least two items (116,118).

14. The method according to any of the preceding claims, wherein transitions from one conveyor to another, or to a support surface, when the at least two items are conveyed towards and onto the support surfaces (106) are provided at one vertical level or substantially one vertical level.

15. A sortation system with a sorter (104) adapted to transport and sort items positioned side-by-side on one or more support surfaces (106) of the sorter, and adapted to discharge one or more of the items towards a first side (108) or a second side (110) of the sorter, the sortation system further comprising,
- a feeding system (102) leading items to the sorter (104) and adapted to order a feeding sequence of the items, the feeding system comprising
- one or more feeding conveyors (101, 1304),
- one or more divert conveyors (103, 103a, 103b),
- one or more induction conveyors (105) having two or more induction sections (105a, 105b) for induction of items from a side of the sorter and for positioning an item from each of the sections side-by-side on the one or more support surfaces of the sorter,
where the one or more support surfaces will firstly pass a first induction section (105a) in a transport direction (112) of the support surfaces in a track (114) of the sorter, and secondly pass a second induction section (105b),
- a control logic for controlling the sortation system, where the control logic is adapted to:
a) determine which two or more items (116, 118) to be sorted by the sorting system fit dimension-wise for positioning side-by-side on the sorter, and
b) determine which item of the two or more items (116, 118) will firstly reach its discharge location (120), where discharge of the item (116) should be performed, in a transport direction (112) of the support surfaces in a track (114) of the sorter, and
c) determine a discharge side among the first side (108) and the second side (110), for the item which will firstly reach its discharge location,
and wherein the feeding system further comprises:
- at least two diverts or divert positions (604, 606, 904, 906, 1004, 1006) on the one or more divert conveyors, where change of feeding direction of the two or more items can take place, where
a first (604, 904, 1004) of the at least two diverts or divert positions diverts one of the two or more items into the second of the induction sections, and
a second (606, 906, 1006) of the at least two diverts or divert positions diverts another of the two or more items into the first of the induction sections,
and wherein the control logic is furthermore adapted to:
- provide a choice by choosing at which of the at least two diverts or divert positions the item which will firstly reach its discharge location should be diverted, in order for said item, after sequential induction of said two or more items by said two or more induction sections onto the one or more support surfaces, to be positioned mostly towards its discharge side relative to the other item(s) of the at least two items,
and wherein the feeding system of the sortation system is furthermore adapted to:
- change a feeding direction of the at least two items at the at least two diverts or divert positions on the one or more divert conveyors by diverting the two or more items at the at least two divert positions in response to said choice, and hereby to order the feeding sequence.

## Patentansprüche

1. Verfahren zum Reihen einer Einspeisungssequenz von Objekten in einem Einspeisungssystem (102), das Objekte zu einem Sortierer (104) eines Objektsortiersystems führt, wobei ein Positionieren von zwei oder mehr Objekten, die nebeneinander an einer oder mehreren Stützflächen (106) des Sortierers positioniert sind, vorgesehen ist, und wobei ein Austreten von einem oder mehreren Objekten zu einer ersten Seite (108) oder einer zweiten Seite (110) des Sortierers vorgesehen ist, wobei das Einspeisungssystem Folgendes umfasst:
- einen oder mehrere Einspeisungsförderer (101, 1304),
- einen oder mehrere Umlenkförderer (103),
- einen oder mehrere Einführungsförderer (105) mit zwei oder mehr Einführungsabschnitten (105a, 105b) zum Einführen von Objekten von einer Seite des Sortierers und zum Positionieren eines Objekts von jedem der Abschnitte nebeneinander an der einen oder den mehreren Stützflächen des Sortierers, wobei die eine oder die mehreren Stützflächen zuerst einen ersten Einführungsabschnitt (105a) in einer Transportrichtung (112) der Stützflächen in einer Spur (114) des Sortierers durchlaufen und danach einen zweiten Einführungsabschnitt (105b) durchlaufen, wobei das Verfahren Folgendes umfasst:
a) Bestimmen, welche zwei oder mehr von dem Sortiersystem zu sortierenden Objekte (116, 118) dimensionsmäßig zur nebeneinander liegenden Positionierung auf dem Sortierer passen,
b) Bestimmen, welches Objekt der zwei oder mehr Objekte (116, 118) zuerst in der Transportrichtung (112) an seine Austrittsstelle (120) gelangen wird, wo das Austreten des Objekts durchzuführen ist, und
c) Bestimmen einer Austrittsseite aus der ersten Seite (108) und der zweiten Seite (110) für das Objekt, das zuerst seine Austrittsstelle erreicht, und wobei das Verfahren ferner Folgendes umfasst:
d) Bereitstellen von mindestens zwei Umlenkstellen oder Umlenkpositionen (604, 606, 904, 906, 1004, 1006) an dem einen oder den mehreren Umlenkförderern, an denen eine Änderung der Einspeisungsrichtung der zwei oder mehr Objekte erfolgen kann, wobei
eine erste (604, 904, 1004) der mindestens zwei Umlenkstellen oder Umlenkpositionen eines der zwei oder mehr Objekte in den zweiten der Einführungsabschnitte umlenkt und
eine zweite (606, 906, 1006) der mindestens zwei Umlenkstellen oder Umlenkpositionen eine anderes der zwei oder mehr Objekte in den ersten der Einführungsabschnitte umlenkt,
e) Bereitstellen einer Auswahl durch Wählen, an welcher der mindestens zwei Umlenkstellen oder Umlenkpositionen das Objekt, das zuerst seine Austrittsstelle erreicht, umzuleiten ist;
damit das Objekt nach dem sequenziellen Einführen der zwei oder mehr Objekte durch die zwei oder mehr Einführungsabschnitte auf die eine oder die mehreren Stützflächen größtenteils zu seiner Austrittsseite relativ zu dem oder den anderen Objekt(en) der mindestens zwei Objekte positioniert wird,
f) Ändern einer Einspeisungsrichtung der mindestens zwei Objekte an den mindestens zwei Umlenkstellen oder Umlenkpositionen auf dem einen oder den mehreren Umlenkförderern durch Umlenken der zwei oder mehr Objekte an den mindestens zwei Umlenkpositionen als Reaktion auf die Auswahl und hierdurch Reihen der Einspeisungssequenz.

2. Verfahren nach Anspruch 1, wobei zwei der mindestens zwei Umlenkstellen oder Umlenkpositionen derart beabstandet sind, dass zwei Objekte, die so angeordnet sind, dass sie nebeneinander an die eine oder die mehreren Stützflächen (106) passen, gleichzeitig umgelenkt werden können.

3. Verfahren nach einem der vorhergehenden Ansprüche, wobei die zwei oder mehr Objekte von dem einen oder den mehreren Umlenkförderern in einer Umlenkrichtung (201), die eine Seite (603, 1906) des einen oder der mehreren Umlenkförderer kreuzt, umgeleitet werden.

4. Verfahren nach einem der vorhergehenden Ansprüche, wobei die mindestens zwei Objekte in unterschiedlichen Einspeisungsrichtungen unmittelbar vor dem Umgeleitetwerden bewegt werden.

5. Verfahren nach einem der vorhergehenden Ansprüche, wobei die mindestens zwei Objekte in entgegengesetzten Einspeisungsrichtungen unmittelbar vor dem Umgeleitetwerden bewegt werden.

6. Verfahren nach Anspruch 3, wenn Anspruch 3 von Anspruch 2 abhängig ist, wobei eine erste imaginäre Linie (605) durch mindestens zwei der zwei oder mehr Umlenkpositionen parallel oder im Wesentlichen parallel zu einer ersten Einspeisungsrichtung (122) ist.

7. Verfahren nach einem der vorhergehenden Ansprüche, wobei eine zweite imaginäre Linie (1005) entlang oder im Wesentlichen entlang einer Mitte von einem der zwei oder mehreren Einführungsabschnitte eine der zwei oder mehr Umlenkstellen oder Umlenkpositionen schneidet.

8. Verfahren nach Anspruch 7, wobei die zweite imaginäre Linie (1005) zusätzlich eine oder mehrere alternative Umlenkstellen oder Umlenkpositionen schneidet.

9. Verfahren nach Anspruch 8, wobei die zweite imaginäre Linie parallel oder im Wesentlichen parallel zu einer geänderten Einspeisungsrichtung (202) und/oder zu einer Umlenkrichtung (201) ist.

10. Verfahren nach Anspruch 3, wenn Anspruch 3 von Anspruch 2 abhängig ist, wobei die zweite imaginäre Linie (1005) in einem Einführungswinkel von einem oder mehreren Einführungsabschnitten (105a, 105b) bereitgestellt ist.

11. Verfahren nach einem der vorhergehenden Ansprüche, wobei die Änderung der Einspeisungsrichtung die letzte Änderung der Bewegungsrichtung jedes der zwei oder mehr Objekte ist, bis jedes der zwei oder mehr Objekte auf einer oder mehreren Stützflächen (106) des Sortierers aufgenommen wird.

12. Verfahren nach einem der vorhergehenden Ansprüche, wobei das Umlenken der mindestens zwei Objekte und hierdurch das Ändern ihrer Einspeisungsrichtung Beibehalten einer Ausrichtung jedes der Objekte umfasst, während die Einspeisungsrichtung geändert wird.

13. Verfahren nach einem der vorhergehenden Ansprüche, wobei die geänderte Einspeisungsrichtung für jedes der mindestens zwei Objekte (116, 118) gleich oder im Wesentlichen gleich ist.

14. Verfahren nach einem der vorhergehenden Ansprüche, wobei Übergänge von einem Förderer zu einem anderen oder zu einer Stützfläche, wenn die mindestens zwei Objekte zu den Stützflächen (106) hin und auf diese befördert werden, auf einer vertikalen Ebene oder im Wesentlichen einer vertikalen Ebene bereitgestellt sind.

15. Sortiersystem mit einem Sortierer (104), der zum Transportieren und Sortieren von Objekten ausgelegt ist, die nebeneinander an einer oder mehreren Stützflächen (106) des Sortierers positioniert sind, und der zum Austreten eines oder mehrerer der Objekte in Richtung einer ersten Seite (108) oder einer zweiten Seite (110) des Sortierers ausgelegt ist, wobei das Sortiersystem ferner Folgendes umfasst:
- ein Einspeisungssystem (102), das Objekte zu dem Sortierer (104) führt und dazu ausgelegt ist, eine Einspeisungssequenz der Objekte zu reihen, wobei das Einspeisungssystem Folgendes umfasst:
- einen oder mehrere Einspeisungsförderer (101, 1304),
- einen oder mehrere Umlenkförderer (103, 103a, 103b),
- einen oder mehrere Einführungsförderer (105) mit zwei oder mehr Einführungsabschnitten (105a, 105b) zum Einführen von Objekten von einer Seite des Sortierers und zum Positionieren eines Objekts von jedem der Abschnitte nebeneinander an der einen oder den mehreren Stützflächen des Sortierers, wobei die eine oder die mehreren Stützflächen zuerst einen ersten Einführungsabschnitt (105a) in einer Transportrichtung (112) der Stützflächen in einer Spur (114) des Sortierers durchlaufen und danach einen zweiten Einführungsabschnitt (105b) durchlaufen,
- eine Steuerlogik zum Steuern des Sortiersystems, wobei die Steuerlogik zu Folgendem ausgelegt ist:
a) Bestimmen, welche zwei oder mehr von dem Sortiersystem zu sortierenden Objekte (116, 118) dimensionsmäßig zur nebeneinander liegenden Positionierung auf dem Sortierer passen, und
b) Bestimmen, welches Objekt der zwei oder mehr Objekte (116, 118) zuerst in einer Transportrichtung (112) der Stützflächen in einer Spur (114) des Sortierers an seine Austrittsstelle (120), wo das Austreten des Objekts (116) durchzuführen ist, gelangen wird und
c) Bestimmen einer Austrittsseite aus der ersten Seite (108) und der zweiten Seite (110) für das Objekt, das zuerst seine Austrittsstelle erreicht,
und wobei das Einspeisungssystem ferner Folgendes umfasst:
- mindestens zwei Umlenkstellen oder Umlenkpositionen (604, 606, 904, 906, 1004, 1006) an dem einen oder den mehreren Umlenkförderern, an denen eine Änderung der Einspeisungsrichtung der zwei oder mehr Objekte erfolgen kann, wobei
eine erste (604, 904, 1004) der mindestens zwei Umlenkstellen oder Umlenkpositionen eines der zwei oder mehr Objekte in den zweiten der Einführungsabschnitte umlenkt und
eine zweite (606, 906, 1006) der mindestens zwei Umlenkstellen oder Umlenkpositionen eine anderes der zwei oder mehr Objekte in den ersten der Einführungsabschnitte umlenkt,
und wobei die Steuerlogik ferner zu Folgendem ausgelegt ist:
- Bereitstellen einer Auswahl durch Wählen, an welcher der mindestens zwei Umlenkstellen oder Umlenkpositionen das Objekt, das zuerst seine Austrittsstelle erreicht, umzuleiten ist;
damit das Objekt nach dem sequenziellen Einführen der zwei oder mehr Objekte durch die zwei oder mehr Einführungsabschnitte auf die eine oder die mehreren Stützflächen größtenteils zu seiner Austrittsseite relativ zu dem oder den anderen Objekt(en) der mindestens zwei Objekte positioniert wird,
und wobei das Einspeisungssystem der Sortiersystem ferner zu Folgendem ausgelegt ist:
- Ändern einer Einspeisungsrichtung der mindestens zwei Objekte an den mindestens zwei Umlenkstellen oder Umlenkpositionen auf dem einen oder den mehreren Umlenkförderern durch Umlenken der zwei oder mehr Objekte an den mindestens zwei Umlenkpositionen als Reaktion auf die Auswahl und hierdurch Reihen der Einspeisungssequenz.

## Revendications

1. Procédé de commande d'une séquence d'alimentation d'articles, dans un système d'alimentation (102) conduisant des articles à une trieuse (104) d'un système de tri d'articles où le positionnement de deux, ou plus, articles positionnés côte à côte sur une ou plusieurs surfaces de support (106) de la trieuse est prévu, et où le déchargement d'un ou plusieurs articles vers un premier côté (108) ou un second côté (110) de la trieuse est prévu, où le système d'alimentation comprend
- un ou plusieurs transporteurs d'alimentation (101, 1304),
- un ou plusieurs transporteurs de déviation (103),
- un ou plusieurs transporteurs d'induction (105) possédant deux, ou plus, sections d'induction (105a, 105b) en vue de l'introduction d'articles en provenance d'un côté de la trieuse et du positionnement d'un article en provenance de chacune des sections côte à côte sur la ou les surfaces de support de la trieuse, où la ou les surfaces de support passent d'abord par une première section d'induction (105a) dans une direction de transport (112) des surfaces de support dans une piste (114) de la trieuse, et ensuite passe par une seconde section d'induction (105b), le procédé comprenant
a) la détermination pour savoir lesquels deux, ou plus, articles (116, 118) à trier par le système de tri présentent des dimensions permettant leur positionnement côte à côte sur la trieuse,
b) la détermination pour savoir quel article des deux, ou plus, articles (116, 118) atteindra en premier son emplacement de déchargement (120) dans la direction de transport (112), où le déchargement de l'article doit être effectué, et
c) la détermination d'un côté de décharge parmi le premier côté (108) et le second côté (110), pour l'article qui atteindra en premier son emplacement de décharge, et ledit procédé comprenant en outre :
d) la fourniture d'au moins deux déviations ou positions de déviation (604, 606, 904, 906, 1004, 1006) sur le ou les transporteurs de déviation, où un changement de direction d'alimentation des deux, ou plus, articles, peut avoir lieu, où
une première (604, 904, 1004) des au moins deux déviations ou positions de déviation dévie l'un des deux, ou plus, articles dans la seconde des sections d'induction, et
une seconde (606, 906, 1006) des au moins deux déviations ou positions de déviation dévie un autre des deux, ou plus, articles dans la première des sections d'induction,
e) la fourniture d'un choix en choisissant au niveau de laquelle des au moins deux déviations ou positions de déviation l'article, qui atteindra en premier son emplacement de décharge, doit être dévié,
afin que ledit article, après induction séquentielle desdits deux, ou plus, articles par lesdites deux, ou plus, sections d'induction sur la ou les surfaces de support, soit positionné principalement vers son côté de décharge par rapport à l'autre ou aux autres articles des au moins deux articles,
f) le changement d'une direction d'alimentation des au moins deux articles au niveau des au moins deux déviations ou positions de déviation sur le ou les transporteurs de déviation en déviant les deux, ou plus, articles au niveau des au moins deux positions de déviation en réponse audit choix, et ordonnant ainsi la séquence d'alimentation.

2. Procédé selon la revendication 1, deux des au moins deux déviations ou positions de déviation étant espacées d'une façon telle que deux articles agencés pour tenir côte à côte sur la ou les surfaces de support (106) peuvent être déviés en même temps.

3. Procédé selon l'une quelconque des revendications précédentes, lesdits deux, ou plus, articles étant déviés du ou des transporteurs de déviation dans une direction de déviation (201) traversant un côté (603, 1906) du ou des transporteurs de déviation.

4. Procédé selon l'une quelconque des revendications précédentes, lesdits au moins deux articles étant déplacés dans des directions d'alimentation différentes juste avant d'être déviés.

5. Procédé selon l'une quelconque des revendications précédentes, lesdits au moins deux articles étant déplacés dans des directions d'alimentation opposées juste avant d'être déviés.

6. Procédé selon la revendication 3 lorsque la revendication 3 dépend de la revendication 2, une première ligne imaginaire (605) passant par au moins deux des deux, ou plus, positions de déviation étant parallèle ou sensiblement parallèle à une première direction d'alimentation (122).

7. Procédé selon l'une quelconque des revendications précédentes, une seconde ligne imaginaire (1005) le long ou sensiblement le long d'un milieu de l'une des deux, ou plus, sections d'induction croisant l'une des deux, ou plus, déviations ou positions de déviation.

8. Procédé selon la revendication 7, ladite seconde ligne imaginaire (1005) croisant également une ou plusieurs déviations ou positions de déviation alternatives.

9. Procédé selon la revendication 8, ladite seconde ligne imaginaire étant parallèle ou sensiblement parallèle à une direction d'alimentation changée (202) et/ou à une direction de déviation (201).

10. Procédé selon la revendication 3 lorsque la revendication 3 dépend de la revendication 2, ladite seconde ligne imaginaire (1005) étant prévue dans un angle d'induction d'une ou de plusieurs sections d'induction (105a, 105b).

11. Procédé selon l'une quelconque des revendications précédentes, ledit changement de direction d'alimentation étant le dernier changement de direction de déplacement de chacun des deux, ou plus, articles jusqu'à ce que chacun des deux, ou plus, articles soit reçu sur une ou plusieurs surfaces de support (106) de la trieuse.

12. Procédé selon l'une quelconque des revendications précédentes, ladite déviation des au moins deux articles et ainsi le changement de leur direction d'alimentation comprenant le maintien d'une orientation de chacun des articles, alors que la direction d'alimentation est changée.

13. Procédé selon l'une quelconque des revendications précédentes, ladite direction d'alimentation changée étant la même ou sensiblement la même pour chacun des au moins deux articles (116, 118).

14. Procédé selon l'une quelconque des revendications précédentes, des transitions d'un transporteur à un autre, ou à une surface de support, lorsque les au moins deux articles sont transportés vers et sur les surfaces de support (106) étant prévues à un niveau vertical ou un niveau sensiblement vertical.

15. Système de tri avec une trieuse (104) adapté pour transporter et trier des articles positionnés côte à côte sur une ou plusieurs surfaces de support (106) de la trieuse, et adapté pour décharger un ou plusieurs des articles vers un premier côté (108) ou un second côté (110) de la trieuse, le système de tri comprenant en outre,
- un système d'alimentation (102) menant des articles à la trieuse (104) et adapté pour ordonner une séquence d'alimentation des articles, le système d'alimentation comprenant
- un ou plusieurs transporteurs d'alimentation (101, 1304),
- un ou plusieurs transporteurs de déviation (103, 103a, 103b),
- un ou plusieurs transporteurs d'induction (105) possédant deux, ou plus, sections d'induction (105a, 105b) en vue de l'introduction d'articles en provenance d'un côté de la trieuse et du positionnement d'un article en provenance de chacune des sections côte à côte sur la ou les surfaces de support de la trieuse, où la ou les surfaces de support passent d'abord par une première section d'induction (105a) dans une direction de transport (112) des surfaces de support dans une piste (114) de la trieuse, et ensuite passe par une seconde section d'induction (105b),
- une logique de commande destinée à commander le système de tri, où la logique de commande est adaptée pour :
a) déterminer lesquels deux, ou plus, articles (116, 118) à trier par le système de tri présentent des dimensions permettant leur positionnement côte à côte sur la trieuse, et
b) déterminer lequel article des deux, ou plus, articles (116, 118) atteindra en premier son emplacement de déchargement (120), où le déchargement de l'article (116) doit être effectué, dans une direction de transport (112) des surfaces de support dans une piste (114) de la trieuse, et
c) déterminer un côté de décharge parmi le premier côté (108) et le second côté (110), pour l'article qui atteindra en premier son emplacement de décharge,
et ledit système d'alimentation comprenant en outre :
- au moins deux déviations ou positions de déviation
(604, 606, 904, 906, 1004, 1006) sur le ou les transporteurs de déviation, où un changement de direction d'alimentation des deux, ou plus, articles peut avoir lieu, où
une première (604, 904, 1004) des au moins deux déviations ou positions de déviation dévie l'un des deux, ou plus, articles dans la seconde des sections d'induction, et
une seconde (606, 906, 1006) des au moins deux déviations ou positions de déviation dévie un autre des deux, ou plus, articles dans la première des sections d'induction,
et ladite logique de commande étant de plus adaptée pour :
- fournir un choix en choisissant au niveau de laquelle des au moins deux déviations ou positions de déviation l'article qui atteindra en premier son emplacement de déchargement doit être dévié,
afin que ledit article, après induction séquentielle desdits deux, ou plus, articles par lesdites deux, ou plus, sections d'induction sur la ou les surfaces de support, soit positionné principalement vers son côté de décharge par rapport à l'autre ou aux autres articles des au moins deux articles,
et ledit système d'alimentation du système de tri étant de plus adapté pour :
- modifier une direction d'alimentation des au moins deux articles au niveau des au moins deux déviations ou positions de déviation sur le ou les transporteurs de déviation en déviant les deux, ou plus, articles au niveau des au moins deux positions de déviation en réponse audit choix, et commander ainsi la séquence d'alimentation.
